(19) Europäisches Patentamt
European Patent Office
Office européen des brevets

(11) Numéro de publication: **0 616 477 A1**

(12) **DEMANDE DE BREVET EUROPEEN**

(21) Numéro de dépôt: **94200617.2**

(22) Date de dépôt: **10.03.94**

(51) Int. Cl.⁵: **H04Q 3/66**, H04L 12/56

(30) Priorité: **17.03.93 FR 9303086**

(43) Date de publication de la demande:
**21.09.94 Bulletin 94/38**

(84) Etats contractants désignés:
**DE FR GB IT**

(71) Demandeur: **LABORATOIRES D'ELECTRONIOUE PHILIPS**
**22, Avenue Descartes**
**F-94450 Limeil-Brévannes (FR)**
(84) **FR**

(71) Demandeur: **N.V. Philips' Gloeilampenfabrieken**
**Groenewoudseweg 1**
**NL-5621 BA Eindhoven (NL)**
(84) **DE GB IT**

(72) Inventeur: **Minot, Joel, Société Civile S.P.I.D.**
**156, Boulevard Haussmann**
**F-75008 Paris (FR)**

(74) Mandataire: **Caron, Jean et al**
**Société Civile S.P.I.D.**
**156, Boulevard Haussmann**
**F-75008 Paris (FR)**

(54) **Dispositif de recherche du chemin de moindre coût dans un réseau de télécommunication.**

(57) Le dispositif est constitué par la présence, dans chaque noeud du réseau, d'un automate cellulaire, composé de cellules (0 à 8) reliées entre elles par des connexions de telle façon que l'ensemble des cellules et des connexions représente respectivement les noeuds et les liens du réseau, chacune des cellules étant munie de moyens de calcul du coût d'un chemin, travaillant de façon asynchrone, et communiquant avec chacune de ses plus proches voisines et seulement avec elles. Lorsque le dispositif est simulé dans une machine séquentielle, cette dernière est programmée, pour choisir l'ordre dans lequel les cellules sont activées, sur la base du nombre minimal de liens à traverser pour relier deux noeuds, qui sont déterminés en faisant tourner l'automate cellulaire avec des états de liens tous égaux entre eux.

Applications : notamment aux réseaux de télécommunication.

FIG.2A          FIG.2B

EP 0 616 477 A1

La présente invention concerne un réseau de télécommunications comprenant des noeuds reliés entre eux par des chemins ou liens, et muni d'un dispositif de recherche du chemin de moindre coût réalisant une recherche adaptative et décentralisée, avec connaissance, au niveau de chacun des noeuds, de l'état complet du réseau.

Dans un réseau de télécommunication, un tel dispositif s'applique pour la recherche de la meilleure route entre deux noeuds, un noeud étant dans ce cas un commutateur de voies, qui peut être émetteur et/ou récepteur.

L'invention concerne aussi de façon plus générale un dispositif de recherche adaptative et décentralisée du meilleur chemin dans un réseau comprenant des noeuds reliés entre eux par des liens, avec connaissance au niveau de chacun des noeuds de l'état complet du réseau.

Une telle recherche est faite depuis fort longtemps dans le cadre de l'optimisation des systèmes, notamment dans les transports.

Un procédé de routage des communications pour un réseau d'autocommutateurs est connu du document EP-A-0 276 754. Dans ce dispositif est employé un algorithme connu dit "de Dijkstra".

Il s'agit de définir un arbre des plus courts chemins : un tel arbre a sa racine au point de départ considéré, ses branches sont des chemins du réseau et ses embranchements correspondent à des noeuds du réseau qui sont rencontrés sur les chemins, et il représente les meilleurs chemins entre ce point de départ et chacun des autres noeuds du réseau. Du fait qu'il représente les meilleurs chemins, il n'est valable qu'à un moment donné en fonction des charges des différents chemins à ce moment. L'algorithme de Dijkstra est un algorithme itératif selon lequel, à chaque itération, on met à jour une liste des noeuds, susceptibles de faire partie d'un plus court chemin au départ d'un noeud donné dit "racine". Un exemple détaillé d' application de cet algorithme sera décrit plus loin.

Des variantes de l'algorithme "de Dijkstra" s'attachent à modifier l'ordre de scrutation des branches d'un sous-arbre partant d'un noeud donné ainsi que le nombre de scrutations de ces branches. Pour une bonne synthèse de l'art antérieur, on peut se référer au document "Description et comparaison des algorithmes de calcul de l'arbre des plus courtes routes", par G. SCHEYS, Technical note, Philips Research Lab. Brussels, May 1991.

L'invention procure un dispositif plus rapide que ceux de l'art antérieur, du fait que chacun des noeuds est muni d'un automate cellulaire, composé de cellules reliées entre elles par des connexions de telle façon que l'ensemble des cellules et des connexions représente respectivement les noeuds et les liens du réseau, chacune des cellules étant munie de moyens de calcul du coût d'un chemin, et communiquant avec chacune de ses plus proches voisines.

Il est vrai que Hopfield & Tank ont réussi à résoudre ce genre de problème de routage au moyen d'un réseau neuronal. Toutefois les résultats obtenus n'étaient pas pleinement satisfaisants, notamment parce qu'un tel dispositif est délicat à mettre au point et qu'il est peu robuste vis-à-vis du bruit. La différence entre un réseau neuronal et l'automate cellulaire employé dans l'invention est que le réseau neuronal est organisé en couches parallèles, avec des poids synaptiques entre les neurones, et nécessite un apprentissage préalable, alors que l'automate est organisé topologiquement comme la reproduction du réseau à optimiser, qu'il ne comporte pas de poids synaptiques, et ne nécessite pas d'apprentissage, mais que par contre ses cellules sont plus complexes que des neurones puisque munies chacune de moyens de calcul du coût d'un chemin.

De préférence les moyens de calcul du coût d'un chemin, dans une cellule d'un automate cellulaire, travaillent de façon asynchrone par rapport à ceux des autres cellules, et les moyens de calcul du coût d'un chemin d'une cellule ne communiquent qu'avec les cellules voisines.

Lorsque l'automate cellulaire est simulé dans une machine séquentielle, cette dernière est avantageusement programmée, pour choisir l'ordre dans lequel les cellules sont activées, sur la base du nombre minimal de liens à traverser pour relier deux noeuds.

Pour choisir l'ordre dans lequel les cellules sont activées sur la base du nombre minimal de liens à traverser pour relier deux noeuds, la machine est avantageusement programmée pour faire tourner l'automate cellulaire avec des états de liens tous égaux entre eux.

Un dispositif de recherche adaptative et décentralisée, avec connaissance au niveau de chacun des noeuds de l'état complet du réseau, est remarquable en ce que chacun des noeuds du réseau est muni d'un automate cellulaire, composé de cellules reliées entre elles par des connexions de telle façon que l'ensemble des cellules et des connexions représente respectivement les noeuds et les liens du réseau, chacune des cellules étant munie de moyens de calcul du coût d'un chemin, et communiquant avec chacune de ses plus proches voisines.

Ces aspects de l'invention ainsi que d'autres aspects plus détaillés apparaîtront plus clairement grâce à la description suivante d'un mode de réalisation non limitatif.

Les figures 1, 2-A, 3 sont des schémas de réseaux. Par la même occasion, ils représentent les automates cellulaires correspondants.

La figure 2-B illustre un arbre des plus courts chemins relatif au réseau de la figure 2A.

Les figures 4, 6, 8 sont des courbes montrant respectivement le temps de calcul nécessaire pour optimiser les routes dans les réseaux des figures 1, 2, 3.

Les figures 5, 7, 9 sont des courbes montrant respectivement la taille mémoire nécessaire pour optimiser les routes dans les réseaux des figures 1, 2, 3.

Le mécanisme de routage est un aspect important dans un réseau de télécommunications. Ce mécanisme est en fait un moyen de détermination ou de sélection du chemin de moindre coût pour transférer des données entre deux noeuds ( commutateurs). Ce moyen répond à une stratégie prédéfinie dont l'objectif peut être la minimisation du nombre de commutatâeurs par lesquels le signal transite, la minimisation du coût de transmission, du délai de transmission, du taux d'erreurs... Pour résoudre un tel problème, il existe plusieurs méthodes :

1) ROUTAGE FIXE : Le routage est dit fixe quand il n'est prévu qu'une seule route possible entre deux commutateurs. Des tables sont précalculées et chargées à la configuration. Comme le routage fixe ne permet aucune route alternative, il n'est valable que quand le trafic est très stable et quand le réseau est fiable.

2) ROUTAGE DYNAMIQUE : Comme pour le routage fixe, des tables sont précalculées. Cependant, des solutions alternatives pré-définies peuvent être proposées, en cas de problèmes.

3) ROUTAGE ADAPTATIF : Contrairement aux deux méthodes précédentes, ce type de routage s'adapte aux variations de trafic. La méthode suppose une mise à jour en temps réel des tables de routage. Il faut donc que la tâche de routage soit capable de récupérer des informations sur l'état d'une partie du réseau (ou de tout le réseau), de calculer les routes et de les convertir en tables de routage.

En outre la décision de routage peut être prise de manière centralisée ou décentralisée :

3-a) décision centralisée : l'algorithme de routage est installé dans un système unique, généralement d'une grosse puissance de calcul. Ce système connaît l'état de tout le réseau et calcule les tables de routage pour tous les noeuds. Les inconvénients d'une telle organisation sont une certaine vulnérabilité (car le noeud serveur de routage est essentiel), la possibilité d'une surcharge ponctuelle au niveau des communications entre noeud serveur de routage et les autres noeuds, et de défauts de synchronisation entre noeuds dûs aux temps de transmission des tables de routage.

3-b) décision décentralisée : dans ce cas, chaque noeud prend sa décision qui est basée sur une approche soit partielle soit complète. Dans l'approche partielle, c'est-à-dire avec connaissance des états des noeuds les plus proches voisins seulement, les décisions sont sous-optimales et les routes peu consistantes, par contre la charge est très faible. Ainsi, la route entre l'émetteur et le destinataire est calculée par tous les noeuds de transits (calcul distribué).

Dans l'approche complète, c'est-à-dire avec connaissance pour chaque noeud des états de tous les autres noeuds, la décision est prise dès l'émission d'un paquet de données numériques avec re-routage éventuel dans les noeuds de transit (calcul local), ce qui procure des routes consistantes (c'est-à-dire sans boucles). Les routes sont de bonne qualité, mais le trafic de routage et le coût en calcul sont plus importants.

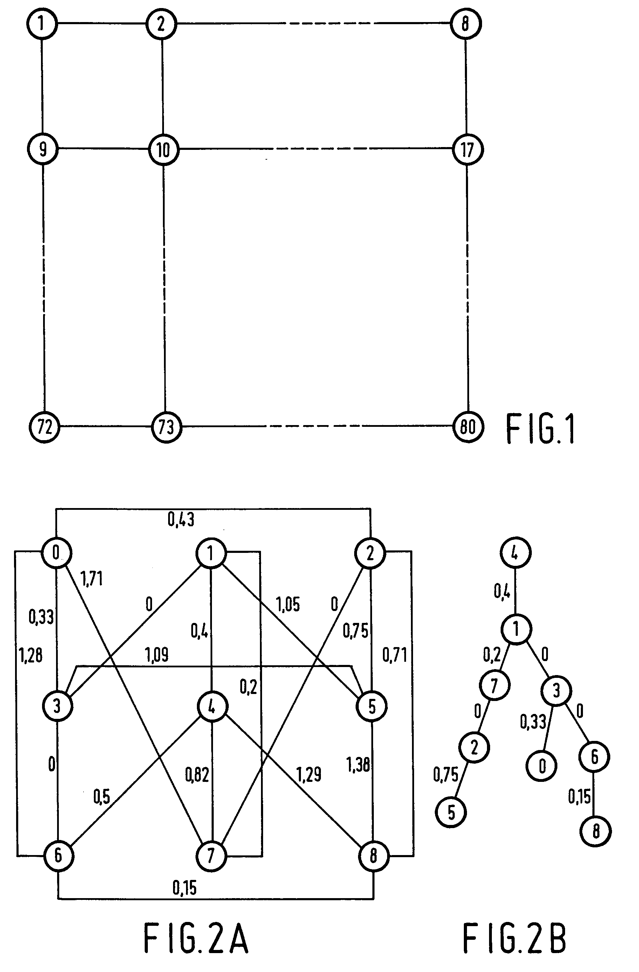

Les figures 1 à 3 représentent trois réseaux de télécommunication différents :
- la figure 1 représente un réseau avec un nombre N = 81 de noeuds et k = 3,55 (k = facteur de maillage),
- la figure 2-A représente un réseau avec N = 9 modules et k = 4, et un exemple de coûts des chemins est indiqué sur la figure,

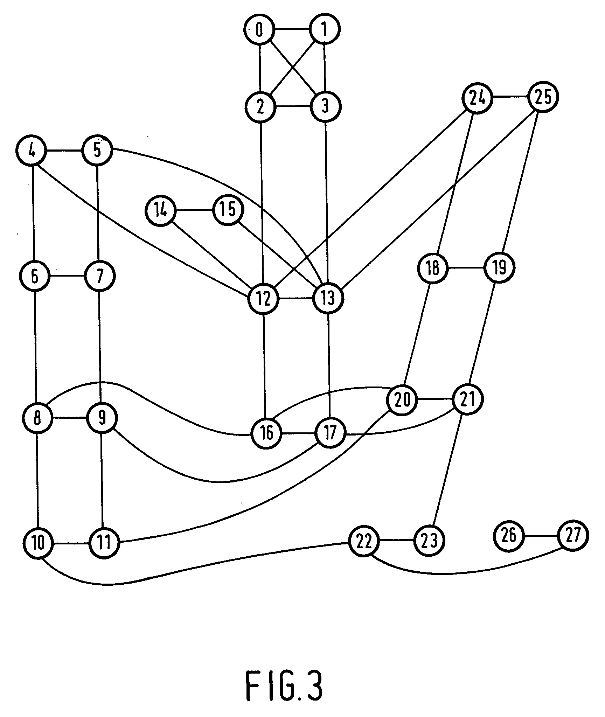

- la figure 3 représente un réseau du genre de ceux employés entre passerelles dans des réseaux de télécommunications en France, avec N = 28 noeuds et k = 3,14.

Dans l'art antérieur était utilisé un algorithme dit de Dijkstra, ou une de ses variantes. Cet algorithme est itératif et à chaque itération, on y met à jour une liste des noeuds, susceptibles de faire partie d'un plus court chemin au départ d'un noeud donné dit "racine". La longueur de chaque chemin entre la racine et un noeud quelconque est associée à ce noeud. Ces longueurs sont toutes initialisées à une valeur infinie et la liste initiale comprend seulement le noeud de départ. Une itération comprend les opérations suivantes : un noeud est retiré de la liste et les distances entre les voisins de ce noeud (un noeud est voisin d'un autre s'il lui est relié par un chemin direct) et la racine sont calculées par descente d'un niveau dans l'arbre des plus courts chemins. Chaque voisin, dont la longueur du chemin ainsi calculée est plus courte que la longueur calculée pour ce noeud jusque là, est ajouté à la liste. L'algorithme stoppe quand la liste est vide.

Supposons que dans le réseau de la figure 2, on fixe comme racine ou noeud de départ le noeud 4. Au départ de la première itération, la liste comprend seulement le noeud 4. On le retire donc et on calcule les longueurs des chemins du noeud 4 vers ses voisins 1, 6, 7, 8 (ce qui donne respectivement : 0,4 0,5 0,82 1,29). Comme ces longueurs étaient initialisées à une valeur infinie, les nouvelles longueurs sont plus courtes et les noeuds 1, 6, 7, 8 sont ajoutés à la liste, qui ne comprend donc, à ce stade, que ces noeuds. Le noeud 1 est retiré et on calcule les longueurs des chemins du noeud 4 via 1, vers les voisins de ce dernier : 3, 7, 5. Code les longueurs correspondant aux noeuds 3, 5 étaient initialisées à une valeur infinie, les nouvelles longueurs (respectivement 0,4 et 1,45) sont plus courtes et les noeuds 3, 5 sont ajoutés à la liste. Pour le noeud 7, la longueur associée était 0,82, elle devient 0,6 (chemins 4-1 + 1-7) et la valeur associée est mise à jour. La liste comprend maintenant les noeuds 3, 5, 6, 7, 8. Le noeud 3 est retiré et on calcule les longueurs des chemins vers les voisins de ce dernier : 0, 5, 6, chemins comptés à partir du noeud 4 via 1 et 3 (c'est-à-dire par descente d'un niveau dans l'arbre des plus courts chemins). Comme la longueur correspondant au noeud 0 était initialisée à une valeur infinie, la nouvelle longueur est plus courte et le noeud 0 est ajouté à la liste. Pour les noeuds 5, 6 les longueurs calculées sont respectivement 1,49 et 0,4, et comme les longueurs associées étaient respectivement 1,45 et 0,5, la valeur pour 6 (plus petite maintenant : 0,4 au lieu de 0,5) est mise à jour alors que celle pour 5 est inchangée (1,45). A chaque fois, le chemin correspondant à la meilleure valeur est noté, associé au noeud destinataire. La liste comprend maintenant les noeuds 0, 5, 6, 7, 8. Le même processus va continuer en retirant tour à tour les noeuds de la liste et en en ajoutant éventuellement d'autres. Comme on ne peut ajouter en fin de compte plus de noeuds que n'en comporte le réseau, alors qu'on enlève un noeud à chaque pas d'itération, la liste finira par être vide. Dans l'exemple choisi, les chemins associés conduisent à l'arbre des plus courts chemins représenté par la figure 2-B, correspondant bien entendu aux coûts des chemins indiqués sur la figure 2-A.

L'invention va être décrite maintenant en utilisant le vocabulaire d'un réseau de télécommunications. Le routage est adaptatif et décentralisé avec connaissance totale du réseau par chacun des noeuds. Sur la base des informations décrivant l'état des liens (notamment "hors service" ou "en service") entre commutateurs, chaque commutateur calcule l'arbre de ses plus courtes routes vers l'ensemble des commutateurs.

Le principe d'une recherche du plus court chemin par automate cellulaire est le suivant : le réseau est représenté, dans chacun des noeuds, par une structure dite automate cellulaire, qui est composée d'éléments non-linéaires, généralement tous identiques et dans laquelle chaque élément, appelé cellule, communique uniquement avec ses plus proches voisins. Les automates cellulaires, dans chacun des noeuds, sont tous identiques, à l'exception du choix de la racine de l'arbre qui est à chaque fois le noeud considéré.

Ainsi, chaque commutateur i du réseau (par exemple i = 0 à 8 sur la figure 2-A) est modélisé par une cellule i dans l'automate. La communication entre deux cellules voisines i et j de l'automate cellulaire n'est autorisée que si les commutateurs équivalents i et j du réseau sont reliés physiquement (par exemple les commutateurs 1-3 sur la figure 2-A, mais pas les commutateurs 3-4).

Ce qui suit décrit le fonctionnement du système situé dans le commutateur "s", c'est-à-dire la construction de l'arbre des plus courts chemins au départ de "s". On suppose connue la matrice C(t) = (C_{ij}(t)) des états des liens entre deux noeuds i et j à chaque instant t (t peut être fonction par exemple de la fréquence de mise à jour de C_{ij}(t) dans le réseau). En fonction des recommandations officielles (norme ISO 8473) pour l'optimisation des ressources, C_{ij}(t) peut être fonction du nombre de voies logiques disponibles dans i, du nombre de mémoires tampons occupées dans les files d'attente dans i, de la charge de travail de i et du débit disponible dans la ligne i-j.

Chaque cellule j doit minimiser la distance entre s et elle-même, et ce en fonction des informations fournies par ses voisines. La distance entre deux noeuds s et j est donnée par la somme des coûts C_{ik}(t) correspondant aux liens i-k traversés le long d'un chemin entre s et j. Une cellule i est voisine de j si elle est directement reliée par un lien de valeur C_{ij}(t) à la cellule j.

La description du fonctionnement d'une cellule i de l'automate cellulaire situé dans le commutateur "s" comprend les quatre étapes suivantes :

1) initialisation :
(a)- du compteur d'itérations : k(i) = 1,
(b)- de la longueur du chemin temporaire entre s et i à l'itération 0 :

$$L_{si}^{0}(t) = \infty$$

2) relaxation : la cellule i récupère la longueur du chemin calculée à l'itération précédente,

$$L_{si}^{k(i)}(t) = L_{si}^{k(i)-1}(t)$$

Pour toutes les cellules voisines j de la cellule i :
(a)- la cellule i récupère la valeur temporaire

$$L_{sj}^{k(j)}(t)$$

exprimant le coût temporaire du chemin entre les noeuds s et j.

(b)- la cellule i additionne à ce coût temporaire le coût $C_{ji}(t)$ de communication de j vers i pour donner la valeur temporaire du chemin de s vers i via j.

(c)- la cellule i mémorise la valeur temporaire

$$L_{si}^{k(i)}$$

qui est donnée par

$$\min(L_{sj}^{k(j)}(t) + C_{ji}(t), L_{si}^{k(i)}(t))$$

et mémorise aussi quel est le voisin j qui permet la minimisation locale de cette valeur.

3) ensuite, quand tous les cellules voisines j ont été scrutées une fois, la cellule i diffuse la valeur

$$L_{si}^{k(i)}$$

minimum ainsi trouvée vers ses voisines j.

4) puis le compteur d'itérations k(i) = k(i) + 1 est incrémenté et la cellule i reboucle à l'étape 2 ci-dessus sans attendre un éventuel signal de synchronisation entre toutes les cellules de l'automate (asynchronisme de l'automate cellulaire).

Le fonctionnement de l'automate cellulaire complet est le suivant : Toutes les cellules i fonctionnent de façon asynchrone et convergent vers un

$$L_{si}^{\infty}(t)$$

minimal. L'automate atteint un état stable quand toutes les cellules i voient simultanément leur

$$L_{si}^{k(i)}$$

minimum inchangé d'une itération (k(i)) sur l'autre (k(i) + 1), c'est-à-dire que pour tout i :

$$L_{si}^{k(i)}(t) = L_{si}^{k(i)+1}(t)$$

Ce test est effectué entre les étapes 3 et 4 du processus décrit ci-dessus.

On peut faire la preuve de la convergence de l'algorithme vers un minimum global pour tous les éléments i de l'automate sous l'hypothèse que tous les $C_{ij}(t)$ sont positifs.

L'installation du processus parallèle sur une machine séquentielle se fait selon les règles suivantes :

Afin de déterminer l'arbre des plus courts chemins au départ d'un noeud s, chaque cellule est activée séquentiellement puisque le parallélisme est irréalisable. Cependant, afin d'accélérer le calcul, l'ordre dans lequel les cellules sont activées est choisi de manière particulière : l'ordre d'activation des cellules est déterminé par le nombre minimal de liens à traverser pour les relier à la cellule "s". La détermination à priori de l'ordre peut donc être faite à l'initialisation du noeud (lors de l'installation du réseau ou à la suite d'une modification), et éventuellement redéfinie en temps réel. Pour cela, on applique le même algorithme que pour le calcul des plus courtes routes, sauf que les coûts des liens sont tous pris égaux à 1.0 (si les états de liens sont tous égaux à 1.0, le coût total

$$L_{si}^{\infty}(t)$$

donne directement le nombre minimal de liens à traverser pour relier les noeuds s et i), et qu'on utilise un ordre d'activation quelconque des cellules. Les valeurs des états de liens peuvent d'ailleurs, au lieu d'être égales à 1, être égales à n'importe quelle valeur mais la même pour tous, et indépendante du trafic dans le réseau. Lorsque l'automate cellulaire fonctionne avec des valeurs 1.0, chaque cellule lit les valeurs des cellules voisines, ajoute 1.0 à chacune d'elles, et retient la plus petite. Ainsi chaque cellule obtient, à la convergence, une valeur égale à la valeur procurée par la cellule voisine, plus 1.0. La valeur obtenue pour chaque cellule est donc égale au nombre de liens traversés entre la base (s) et cette cellule. On dresse alors une liste des cellules rangées dans l'ordre croissant des valeurs.

L'ordre dans lequel les cellules seront examinées dans les phases suivantes est maintenant défini par cette liste des cellules. Dans ces phases suivantes, qui réalisent donc la recherche des plus courts chemins en régime permanent, c'est-à-dire avec des $C_{ij}$ réels pendant le fonctionnement normal du commutateur, d'abord seules les cellules voisines de "s" calculent les coûts respectifs entre "s" et elles mêmes. Il est inutile que les autres cellules le fassent puisqu'elles sommeraient des valeurs infinies (rappel :

$$L_{si}^{k(i)}(t) = \infty$$

à l' initialisation). Ensuite, à la seconde itération, seules les cellules voisines de "s" et les cellules voisines des cellules voisines de "s" seront examinées, et ainsi de suite pour les itérations suivantes. Il a été observé que cette heuristique permet d'accélérer la vitesse de convergence d'un facteur 2 à 3, par rapport à un ordre d'activation quelconque.

Le surcoût en code d'une telle façon de faire est minime puisque déterminer le nombre minimal de liens à traverser (c'est-à-dire de commutateurs à franchir) revient simplement à faire tourner l'algorithme avec des états de liens tous égaux entre eux et avec un ordre d'activation quelconque.

Des tests ont été réalisés sur les trois types de réseaux différents correspondant aux figures 1 à 3. Le fonctionnement du dispositif selon l'invention a été comparé à certains des algorithmes sélectionnés par G. Scheys dans le document cité en préambule: l'algorithme de Ford-Moore et l'algorithme de Pape.

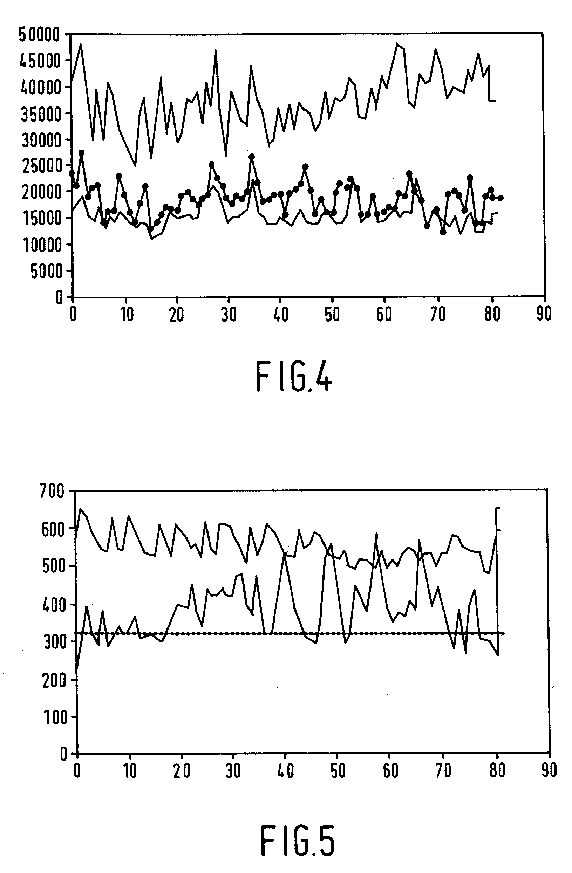

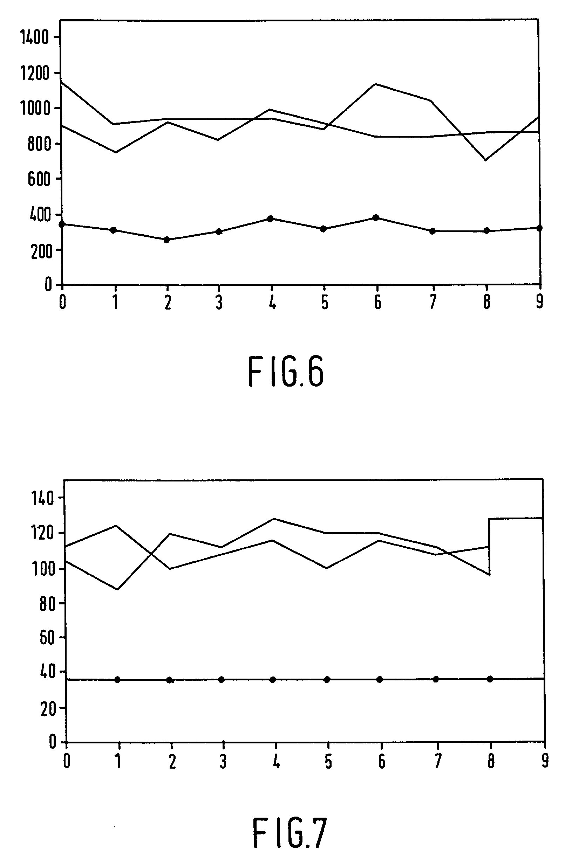

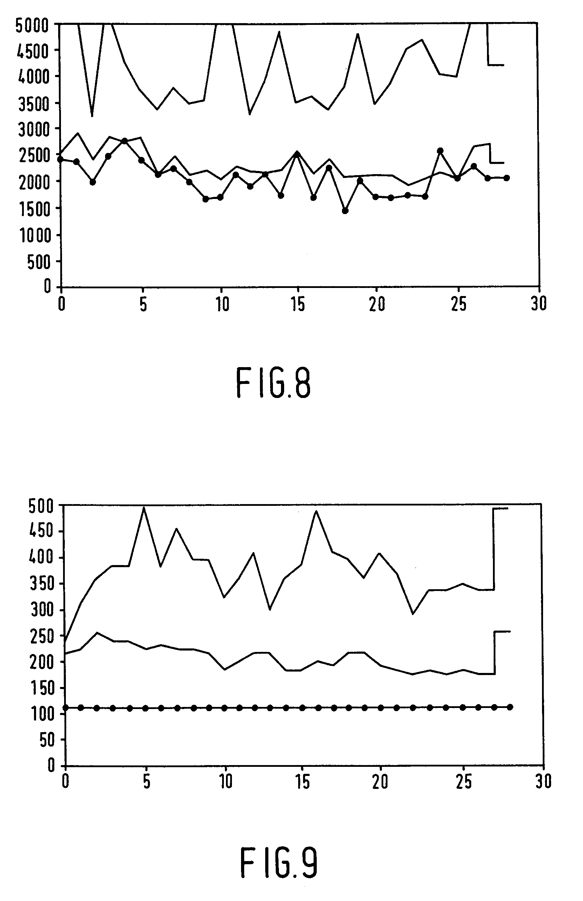

La démarche de test a été la suivante : l'arbre des plus courtes distances est recherché au départ de chaque noeud "s" et ce pour $T = 20$ états de réseau différents. Ces T états résultent en fait de T tirages aléatoires de matrices $(C_{ij})(t)$ avec $0 < C_{ij} \leq 2.0$ pour les liens i-j existants et $1 \leq t \leq T$. Ensuite les mesures effectuées sur les algorithmes lors du calcul des T arbres sont reportés sur des courbes, représentées par les figures 4 à 9. Le trait le plus épais y correspond à l'algorithme de Ford-Moore, le trait le plus mince à celui de Pape, et celui avec des points à celui selon l'invention. Les figures 4 et 5 concernent le réseau de la figure 1, les figures 6 et 7 concernent le réseau de la figure 2, les figures 8 et 9 concernent le réseau de la figure 3. Les figures de numéro pair présentent en fonction du numéro du noeud "s" dans le réseau le temps moyen nécessaire pour calculer le routage, moyenné sur les T constructions d'arbre (chaque noeud calcule les chemins à partir de lui même, c'est-à-dire est pris tour à tour en tant que noeud "s", de façon à disposer d'une liste de solutions pour tous les cas possibles), et les figures de numéro impair la valeur maximale de la mémoire dynamique allouée pour celle des T constructions d'arbre qui en réclame le plus.

En outre, la valeur moyenne du temps de routage sur tous les noeuds "s" (pour les figures 4, 6 et 8), et la valeur maximale de la mémoire allouée dans le pire cas parmi tous les noeuds "s" (pour les figures 5, 7 et 9) sont représentées sur ces courbes sous la forme d'un $(N + 1)$ième noeud du réseau (qui évidement n'existe pas).

Les algorithmes ont été écrits en langage dit c sur machine "SUN" et compilés par le compilateur C + + 2.0. Les mesures ont été effectuées sur une machine "SUN SPARC 4/65 32 Mo".

On peut constater que l'algorithme basé sur les automates cellulaires s'avère plus performant en termes de vitesse, de mémoire utilisée et de complexité du code, au moins pour des réseaux de complexité limitée. Quand la dimension du réseau s'accroît, l'algorithme basé sur les automates cellulaires devient moins rapide que l'algorithme de Ford-Moore, mais comme les réseaux ont la plupart du temps une structure hiérarchique qui permet de les décomposer en sous ensembles plus petits qui peuvent être traités séparément les uns des autres, le cas de grands réseaux ne se présente pas en pratique.

## Revendications

1. Réseau de télécommunications comprenant des noeuds reliés entre eux par des chemins ou liens, et muni d'un dispositif de recherche du chemin de moindre coût réalisant une recherche adaptative et décentralisée, avec connaissance, au niveau de chacun des noeuds, de l'état complet du réseau, caractérisé en ce que chacun des noeuds est muni d'un automate cellulaire, composé de cellules reliées entre elles par des connexions de telle façon que l'ensemble des cellules et des connexions représente respectivement les noeuds et les liens du réseau, chacune des cellules étant munie de moyens de calcul du coût d'un chemin, et communiquant avec chacune de ses plus proches voisines.

2. Réseau de télécommunications selon la revendication 1, caractérisé en ce que les moyens de calcul du coût d'un chemin, dans une cellule d'un automate cellulaire, travaillent de façon asynchrone par rapport à ceux des autres cellules.

3. Réseau de télécommunications selon l'une des revendications 1 ou 2, caractérisé en ce que les moyens de calcul du coût d'un chemin d'une cellule ne communiquent qu'avec les cellules voisines.

4. Réseau de télécommunications selon l'une quelconque des revendications 1 à 3, dont chaque automate cellulaire est simulé dans une machine séquentielle, caractérisé en ce que cette dernière est programmée, pour choisir l'ordre dans lequel les cellules sont activées, sur la base du nombre minimal de liens à traverser pour relier deux noeuds.

5. Réseau de télécommunications selon la revendication 4, caractérisé en ce que pour choisir l'ordre dans lequel les cellules sont activées sur la base du nombre minimal de liens à traverser pour relier deux noeuds, la machine est programmée pour faire tourner l'automate cellulaire avec des états de liens tous égaux entre eux.

6. Dispositif de recherche adaptative et décentralisée du meilleur chemin dans un réseau comprenant des noeuds reliés entre eux par des liens, avec connaissance au niveau de chacun des noeuds de l'étati complet du réseau, caractérisé en ce que chacun des noeuds du réseau est muni d'un automate cellulaire, composé de cellules reliées entre elles par des connexions de telle façon que l'ensemble des cellules et des connexions représente respectivement les noeuds et les liens du réseau, chacune des cellules étant munie de moyens de calcul du coût d'un chemin, et communiquant avec chacune de ses plus proches voisines.

FIG.1

FIG.2A

FIG.2B

FIG.3

FIG.4

FIG.5

10

FIG.6

FIG.7

FIG.8

FIG.9

12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-4 987 536 (HUMBLET) <br> * colonne 2, ligne 34 - colonne 5, ligne 66 * | 1,2 | H04Q3/66 <br> H04L12/56 |
| A | COMPUTER COMMUNICATION REVIEW, vol.19, no.4, Septembre 1989, NEWYORK (US) pages 237 - 246, XP133127 <br> B. RAJAGOPALAN ET AL 'A New Responsive Distributed Shortest-Path Routing Algorithm' <br> * le document en entier * | 1-3 | |
| A | PROCEEDINGS IEEE INFOCOM, 27 Mars 1988, NEW ORLEANS (US) pages 1125 - 1137 <br> J.J. GARCIA-LUNA-ACEVES 'A distributed, loop-free, shortest-path routing algorithm' <br> * page 1126, colonne de droite, ligne 5 - ligne 34 * <br> * alinéa 2.1 * <br> * alinéa 2.3 * <br> * alinéa 3 * | 1-3 | |

**DOMAINES TECHNIQUES RECHERCHES (Int.Cl.5)**

H04Q
H04L
H04M

| Catégorie | Citation | Revendication | |
|---|---|---|---|
| A | IEEE MILITARY COMMUNICATIONS CONFERENCE, vol.1, 15 Octobre 1989, BOSTON (US) pages 688 - 692, XP131899 <br> R. MOULDIN ET AL 'A New Path Metric for Survivable Circuit Switched Routing' <br> * le document en entier * | 1,2 | |
| A | ACM TRANSACTIONS ON NETWORKING, vol.1, no.1, Février 1993, NEWYORK (US) pages 130 - 141, XP362256 <br> J.J. GARCIA-LUNES-ACEVES 'Loop-Free Routing Using Diffusing Computations' <br> * le document en entier * | 1-3 | |

Le présent rapport a été établi pour toutes les revendications

| Lieu de la recherche | Date d'achèvement de la recherche | Examinateur |
|---|---|---|
| LA HAYE | 16 Juin 1994 | De Muyt, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)